(19) Europäisches Patentamt
European Patent Office
Office européen des brevets

(11) **EP 3 313 196 B1**

(12) **EUROPEAN PATENT SPECIFICATION**

(45) Date of publication and mention
of the grant of the patent:
**17.04.2019 Bulletin 2019/16**

(51) Int Cl.:
**A23G 9/14** (2006.01)        **A23G 9/28** (2006.01)

(21) Application number: **16729936.1**

(22) Date of filing: **20.06.2016**

(86) International application number:
**PCT/EP2016/064154**

(87) International publication number:
**WO 2016/207102 (29.12.2016 Gazette 2016/52)**

(54) **A PROCESS FOR FILLING A CONTAINER WITH FROZEN CONFECTION**

VERFAHREN ZUM FÜLLEN EINES BEHÄLTERS MIT EISKONFEKT

PROCÉDÉ POUR REMPLIR UN RÉCIPIENT AVEC UNE CONFISERIE CONGELÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2015 EP 15173947**

(43) Date of publication of application:
**02.05.2018 Bulletin 2018/18**

(73) Proprietors:
• **Unilever PLC, a company registered in England
and
Wales under company no. 41424
Greater London EC4Y 0DY (GB)**
Designated Contracting States:
**CY GB IE MT**
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventor: **MACGREGOR, Robert, Anthony
Bedford
Bedfordshire MK44 1LQ (GB)**

(74) Representative: **Turner, Felicity Margaret Mary
Unilever Patent Group
Colworth House
Sharnbrook, Bedford MK44 1LQ (GB)**

(56) References cited:
**EP-A1- 2 345 332      WO-A1-94/02027
WO-A1-97/03570      WO-A1-2010/063572
GB-A- 1 165 448**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention is defined by the claims and relates to a process for filling a container with a first frozen confection material encapsulating a second confection material.

### Background and Prior Art

In a frozen confection factory, filling heads are employed to fill containers such as a mould, cone or tub. The time available for such filling is very short, for example less than 2 seconds, and normally less than 1.5 seconds. Therefore, if anything other than a single homogenous product is desired to be delivered then a sophisticated filling head operation is required, given such tight time constraints.

EP 2345332 A1 discloses a filling head for producing a flow of first frozen confection encapsulating a second confection material.

The filling head comprises a housing and a reciprocating piston therein. To the housing is fed a first confection material to a first chamber and a second confection material to a second chamber.

The piston contains an internal material flow channel from its outer wall to its lower end.

The filling head is operated by lowering it into position in the vicinity of the bottom of a container. The piston is initially in its lowermost position blocking all flow of confection material. The piston is then moved up to a mid position, allowing the first frozen confection material to flow out of the filling head but blocking the second confection material. The piston is then moved to an upper position, where both first and second confection materials flow out of the nozzle.

As an optional step, the piston may proceed to a position above the upper position where the first confection material continues to flow but the second confection material is blocked once again.

Once the container is filled to the desired level the piston then moves rapidly downwards to its lowermost position so that the piston interrupts firstly the second confection material (as it reaches its mid position) and then the first confection material (as it reaches its lowermost position).

Such a filling head and its modes of operation can therefore coextrude the second confection material encapsulated within the first confection material.

However, if it is desired to have the top surface being purely made of the first confection material to truly encapsulate the second confection material, then this becomes problematic.

This is because such a top layer of first confection is provided by raising the piston above the upper position in the optional step as discussed. This has the desired effect of allowing the first confection material to flow whilst stopping the second confection material. However, the piston must eventually move rapidly downwards to close the flow once the container is sufficiently filled. This means that, on its downwards stroke, the piston must necessarily move through the upper position where both first and second confection materials flow, thus allowing the flow of second confection to exit the nozzle and potentially appear on the surface of the deposited confection. Even if such a downstroke is rapid, this does not prevent the possibility of some second confection exiting the nozzle undesirably.

Thus, improvements in the design and operation of a filling head for the delivery of a truly encapsulated second confection material within a first confection material, would be highly desirable.

### Summary of the Invention

The invention relates to a process for filling a container with a first frozen confection material encapsulating a second confection material, the process involving the use of a filling head; the filling head comprising:

> a housing having a nozzle exit, a lower first material inlet, an upper second material inlet and
> a reciprocatable piston movable within the housing; the piston having an outer wall and upper and lower ends and an internal material flow channel connecting an upper entry in the outer wall to an exit in the lower end,

the piston, housing and inlets being positioned and dimensioned such that the piston has:

> (1) a lower position wherein material flows from both first and second inlets are blocked by the piston outer wall;
> (2) a mid position wherein the piston does not block the first inlet but the second inlet is blocked by the piston outer wall;
> (3) an upper position wherein the first inlet is not blocked and wherein the second material inlet is in communication with the internal material flow channel;

the process involving allowing frozen confection material to flow out of the nozzle exit into the container as the piston moves in an upstroke from (1) a lower position to (2) a mid position and then to (3) an upper position whereupon the first and second materials are coextruded from the exit nozzle, followed by a downstroke to (2) a mid position whereupon only first material is extruded from the exit nozzle to encapsulate the previously extruded second material, and then to (1) a lower position.

Thus, the piston produces a coextruded quantity of first and second confection in its upper position. When sufficient quantity has been delivered the piston moves downwards to a mid position in order to encapsulate the second filling confection by depositing a layer of first composition over the top. Thus the piston spends sufficient time in the mid position on the downstroke to provide this encapsulating top layer. Then finally the piston continues its downstroke to the lowermost position where the flow is stopped and the confection is dispensed.

A typical filling operation involves the insertion of the filling head into a container and allowing frozen confection material to flow out of the nozzle exit as the filling head rises above an evolving surface of frozen confection material until the container is substantially filled simultaneously with the movement (upstroke and downstroke) of the piston.

What is produced is a truly encapsulated second confection with a clean top layer of only first confection.

In a preferred embodiment, the process for filling a container can start with an initial flow of only the first confection material when the piston makes its upstroke to the mid position. Thus, by spending an appreciable amount of time at the mid position on the upstroke, further encapsulation of the second confection material is possible by providing both a base layer of first confection material as well as a subsequent top layer of first confection material.

In a preferred process, the piston moves in its upstroke in a continuous movement, passing through the lowermost, mid and upper positions as it moves. Once at the upper position, the piston must stay there for sufficient time for sufficient coextrusion and therefore flow of the encapsulated second confection material. In a preferred process, the piston moves in its downstroke in a continuous movement, passing through the uppermost, mid position and lowermost position as it moves until flow is stopped at the lowermost position.

In a preferred process the time taken for the piston to move from the lower position to the upper position is from 0.2 to 2.0 seconds, more preferably from 0.2 to 1.0 seconds. In a most preferred process the time taken is from 0.2 to 0.6 seconds.

In a preferred process the time taken for the piston to move from the upper position to the lower position is from 0.2 to 2.0 seconds, more preferably from 0.2 to 1.0 seconds. In a most preferred process the time taken is from 0.2 to 0.6 seconds.

In a preferred process the time taken for the upstroke is substantially the same as the time taken for the downstroke.

The housing comprises a shaft within which the piston moves. In this embodiment the shaft comprises an opening for the first material inlet and an opening for the second material inlet. Typically the shaft will be dimensioned to provide a snug fit with the piston so that the outer walls of the piston engage with the walls of the shaft. This enables the physical positioning of the piston to be used to block or allow the flow of material into the shaft from inlets to the housing.

In the lower position, the first inlet is typically blocked by the piston engaging with the nozzle exit to close it off. The second inlet is conveniently blocked by the physical presence of the piston preventing the flow of first material into the housing.

In the mid position, the first inlet is conveniently opened by virtue of the piston moving upwards and unblocking the nozzle outlet. However, in this position the second inlet is still conveniently blocked by the physical presence of the piston preventing the flow of first material into the housing.

In the upper position, the first inlet continues to remain open as it does for the mid position. However now the second material inlet is in communication with the internal material flow channel by virtue of alignment between the opening in the outer wall of the piston with the second material inlet. This allows the second material to flow through the internal material flow channel and appear out of the lower end of the piston. In this way the second material can be coextruded by being surrounded by an annular flow of first confection material.

Thus, in this embodiment the upper entry in the outer wall of the piston is positioned below the second material inlet when the piston is in both the lower and mid positions. When in the upper position the upper entry in the outer wall is in communication with the second material inlet.

The first frozen confection material of the present invention may be aerated. The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, %overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

The amount of overrun present in the product will vary depending on the desired product characteristics. In the context of the present invention the level of overrun is typically from 0 to 150%, preferably from 60 to 150%, more preferably from 60 to 100%.

Frozen confection material means a confection made by freezing a pasteurised mix of ingredients such as water, fat, sweetener, protein (normally milk proteins), and optionally other ingredients such as emulsifiers, stabilisers, colours and flavours. Frozen confection materials may be aerated. Frozen confection materials include ice cream, frozen yoghurt and the like. Preferably the first frozen confection material is an ice cream.

The frozen confectionery products that are produced by the process of the invention are typically single serving products e.g. 50-500mL, preferably 70-200mL in size. The frozen confection is preferably contained in a receptacle, which may be edible (e.g. a wafer or chocolate cone) or inedible (e.g. a tub).

The second confection may be frozen or non-frozen. If the second confection is frozen then it may have any of the properties described above in the context of the first frozen confection material. Preferably the second confection is a frozen confection.

The second confection may be any filling typically used in frozen confections, and may be liquid or solid. The relative amounts of first and second confections are controlled by adjusting the flow rate of the frozen confection material and the flow rate and / or the dose rate of the second confection. Preferably the second confection constitutes at least 20%, more preferably at least 30% or 40%, even more preferably at least 50%, most preferably at least 60% of the total weight of the product.

Solid second confections can include one or more discrete pieces of an edible material ("inclusions"), such as chocolate, fruit (which may be e.g. fresh, dried, frozen or sugar-infused), nut, biscuit, cake, cookie, toffee, fudge, nougat, marshmallow and the like. Preferably the solid inclusions are from 1 mm to 10mm in size, more preferably from 2 to 9mm, most preferably from 5 to 8mm.

Suitable liquid second confections include fat-based compositions such as chocolate or couverture (i.e. a chocolate analogue containing a fat other than cocoa butter); fruit purees / sauces; creams, cookie dough, biscuit pastes, honey, syrups, caramel, toffee, nougat or fudge sauces and the like. The second confection may be in the form of a fondant or a paste. The second confection may be aerated, for example a fruit or chocolate mousse. The second confection may also be a frozen confection which differs in some way (such as in formulation, texture, flavour or colouring) from the first frozen confection material. We have found that the method and apparatus of the invention allow highly viscous liquid fillings to be dosed. For example, the second confection may have a viscosity of at least 100 mPas, more preferably at least 500mPas, most preferably at least 1000 mPas (measured using a TA Instruments, AR 2000 rheometer with a concentric cylinder system at room temperature and a shear rate of 10s-1).

The filling may be a mixture of one or more of the fillings described above. For example, liquid fillings may have solid inclusions suspended within them. In this case the inclusions are introduced into the liquid filing before the combined filling is pumped to the chamber. The amount of solid inclusions is preferably at least 2% by weight of the total filling (i.e. the combined amount of solid inclusions and liquid filling), more preferably at least 5 wt%. Preferably the amount of solid inclusions is less than 30 wt%, more preferably less than 20 wt%.

The frozen confection itself may also contain inclusions which are mixed into the frozen confection before the frozen confection is supplied to the inlets of the first chamber. Preferably the inclusions in the frozen confection are from 1 mm to 5mm in size, more preferably from 3 to 4mm. The amount of inclusions is preferably at least 2% by weight of the combined amount of these inclusions and the frozen confection, more preferably at least 5 wt%. Preferably the amount of inclusions is less than 20 wt%, more preferably less than 10 wt%. Adding inclusions into the frozen confection (as well as the filling) provides further interest for the consumer, and can also provide contrasting flavours and textures.

The invention will now be illustrated, by way of example, with reference to the following figures in which:

Figure 1 is a side sectional view of a filling head according to the invention in its lowermost position.
Figure 2 is a side sectional view of a filling head according to the invention in its mid position.
Figure 3 is a side sectional view of a filling head according to the invention in its upper position.
Figure 4 is an image of a frozen confection produced according to the process of the present invention, cut in half exposing the internal structure.

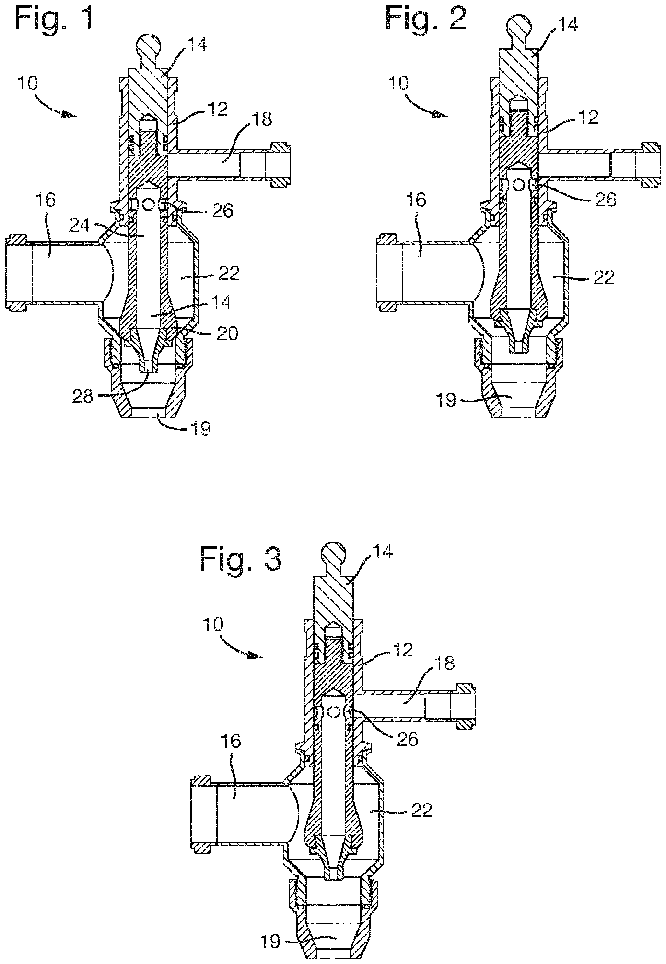

Turning to the figures, figure 1 shows a filling head **10** comprising a housing **12** and a reciprocatable piston **14**. The housing **12** comprises a first material inlet **16** and second material inlet **18** and a nozzle **19**.

As can be seen in the figures the piston **14** comprises a generally cylindrical shaft with an expanded lower region **20** at its lower end. The piston makes a snug fit with the housing in the upper region of the housing **12**. However there is an expanded region of the housing **22** where there is an appreciable gap between the wall of the piston **14** and the housing **12**.

Within the piston **14** is an internal material flow channel **24** connecting an upper entry **26** in the outer wall to an exit **28** in the lower end.

The first material inlet feeds into the expanded region of the housing **22**. This region **22** is therefore generally filled with first confection material in use.

The second material inlet **18** feeds directly into the shaft of the housing and meets the outer wall of the piston **14**.

In the position shown in figure 1 the piston **14** is in its lower position. It can be seen that the flow of first confection material is blocked due to the contact between the expanded lower region of the piston **20** with the wall of the housing **12**. Flow of the second confection material is blocked by the presence of the outer wall of the piston **14**. Thus in this position there is no flow of any confection material out of nozzle **19**.

In the position shown in figure 2 the piston **14** is in its mid position. It can be seen that there is a gap between the expanded lower region of the piston **20** and the wall of the housing **12**. Thus, the first confection material can flow through the first material inlet **16**, through the expanded chamber **22** and out of nozzle **19**. Flow of the second confection material is still blocked by the presence of the outer wall of the piston **14**.

In the position shown in figure 3 the piston **14** is in its upper position. It can be seen that there is a gap between the expanded lower region of the piston **20** and the wall of the housing **12**. Thus, the first confection material can flow through the first material inlet **16**, through the expanded chamber **22** and out of nozzle **19**. It can be seen that upper entry **26** in the outer wall of piston **14** is aligned and in communication with second material inlet **18**. Thus, the second confection can flow through the second material inlet **18**, through the internal material flow channel **24** to the exit **28** in the lower end of the piston **14**.

Furthermore, as the exit **28** is located centrally to the nozzle **19**, the result is that there is coextrusion from the nozzle **19** of a central region of second confection material surrounded by an annulus of first confection material.

In use, the entire filling head **10** is positioned above a container which is to be filled with confection. Filling begins as the piston moves upwards away from the position shown in figure 1. Initially, only first confection material flows out of nozzle to produce a base layer of first confection material in the container. As it moves upwards to the mid position this continues to be the case. Once the upper position is reached then coextrusion begins and a core of second confection material is produced within a surrounding annular region of first confection material.

Once sufficient material has been coextruded the piston moves downwards, closing off the flow of second confection material as the mid point is reached as shown in figure 2. This results in a top layer of encompassing first confection material. Flow is stopped when the piston reaches the lower position and the container is now full of second confection material fully encased in first confection material. In one particular embodiment, the entire process of filing takes a total of 1.2 seconds.

The filling head shown in figures 1 to 3 was used in a pilot plant to deposit an ice cream confection into a tub in a process according to the present invention. The first confection material was a vanilla ice cream composition with biscuit inclusions. The second confection material was a chocolate flavoured ice cream.

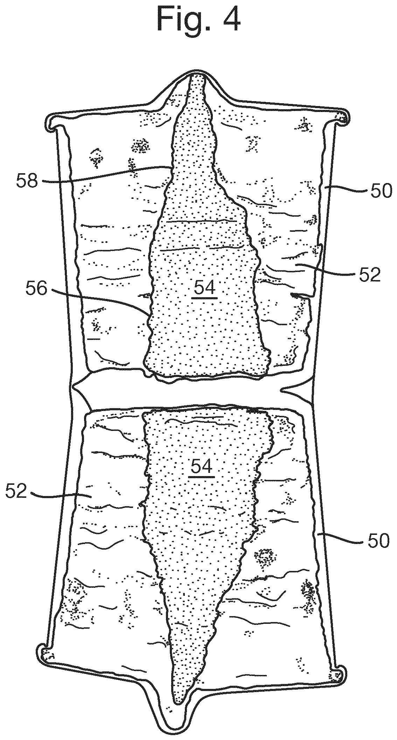

Once filled the tub was sliced in half so that the internal hidden contents could be seen. An image of the internal view of the two halves is shown in figure 4. As can be seen there is a tub **50** wall enclosing first confection material **52** and a core of second confection material **54**. It can be seen that the second confection material **54** has a region of relatively uniform thickness **56** and a region of tapered thickness **58**. The uniform region is produced whilst the piston is in its upper position. The tapered region is produced as the piston moves towards the mid position on its downstroke and gradually chokes of the flow of second material to produce the tapering effect.

## Claims

1. A process for filling a container with a first frozen confection material encapsulating a second confection material, the process involving the use of a filling head (10); the filling head (10) comprising:

   a housing (12) having a nozzle exit (19), a lower first material inlet (16), an upper second material inlet (18) and a reciprocatable piston (14) movable within the housing (12); the piston (14) having an outer wall and upper and lower ends and an internal material flow channel (24) connecting an upper entry (26) in the outer wall to an exit (28) in the lower end,

   the piston (14), housing (12) and inlets (16, 18) being positioned and dimensioned such that the piston (14) has:

   (1) a lower position wherein material flows from both first (16) and second (18) inlets are blocked by the piston (14) outer wall;
   (2) a mid position wherein the piston (14) does not block the first inlet (16) but the second inlet (18) is blocked by the piston (14) outer wall;
   (3) an upper position wherein the first inlet (16) is not blocked and wherein the second material inlet (18) is in communication with the internal material flow channel (24);

the process involving allowing frozen confection material to flow out of the nozzle exit (19) into the container as the piston (14) moves in an upstroke from (1) a lower position to (2) a mid position and then to (3) an upper position whereupon the first and second materials are coextruded from the exit nozzle, followed by a downstroke to (2) a mid position whereupon only first material is extruded from the exit nozzle to encapsulate the previously extruded second material, and then to (1) a lower position.

2. A process according to claim 1, involving the insertion of the filling head (10) into the container and, simultaneously with the movement of the piston (14), allowing
frozen confection material to flow out of the nozzle exit (19) as the filling head rises above an evolving surface of frozen confection material until the container is substantially filled just as the piston reaches its lower position on its return downstroke.

3. A process according to any one of the preceding claims, wherein the piston (14) moves in its upstroke in a continuous movement, passing through the lowermost (1), mid (2) and upper (3) positions as it moves.

4. A process according to any one of the preceding claims, wherein the piston (14) moves in its downstroke in a continuous movement, passing through the uppermost position (3), mid position (2) and lowermost position (1) as it moves until flow is stopped at the lowermost position (1).

5. A process according to any one of the preceding claims, wherein the time taken for the piston (14) to move from the lower position (1) to the upper position (3) is from 0.2 to 2.0 seconds, more preferably from 0.2 to 1.0 seconds, most preferably from 0.2 to 0.6 seconds.

6. A process according to any one of the preceding claims, wherein the time taken for the piston (14) to move from the upper position (3) to the lower position (1) is from 0.2 to 2.0 seconds, more preferably from 0.2 to 1.0 seconds, most preferably from 0.2 to 0.6 seconds.

7. A process according to any one of the preceding claims, wherein the time taken for the upstroke is substantially the same as the time taken for the downstroke.

8. A process according to any one of the preceding claims, wherein the first frozen confection material is an ice cream.

## Patentansprüche

1. Verfahren zum Füllen eines Behälters mit einem ersten Eiskonfektmaterial, das ein zweites Konfektmaterial einkapselt, wobei das Verfahren die Verwendung eines Füllkopfes (10) umfasst; wobei der Füllkopf (10) Folgendes umfasst:

ein Gehäuse (12), das einen Düsenausgang (19), einen unteren ersten Materialeinlass (16), einen oberen zweiten Materialeinlass (18) und einen hin- und herbewegbaren Kolben (14), der im Gehäuse (12) beweglich ist, besitzt; wobei
der Kolben (14) eine Außenwand, ein oberes und ein unteres Ende und einen internen Materialflusskanal (24), der einen oberen Zugang (26) in der Außenwand mit einem Ausgang (28) im unteren Ende verbindet, besitzt, und
der Kolben (14), das Gehäuse (12) und Einlässe (16, 18) derart positioniert und dimensioniert sind, dass der Kolben (14) Folgendes besitzt:

(1) eine untere Position, in der Materialflüsse sowohl vom ersten (16) als auch vom zweiten (18) Einlass durch die Außenwand des Kolbens (14) blockiert sind;
(2) eine mittlere Position, in der der Kolben (14) den ersten Einlass (16) nicht blockiert, jedoch der zweite Einlass (18) durch die Außenwand des Kolbens (14) blockiert ist; und
(3) eine obere Position, in der der erste Einlass (16) nicht blockiert ist und in der der zweite Materialeinlass (18) in Kommunikation mit dem internen Materialflusskanal (24) ist; wobei

das Verfahren das Ermöglichen umfasst, dass ein Eiskonfektmaterial aus dem Düsenausgang (19) in den Behälter fließt, während sich der Kolben (14) in einer Aufwärtsbewegung von (1) einer unteren Position zu (2) einer mittleren Position und dann zu (3) einer oberen Position bewegt, woraufhin das erste und das zweite Material aus der Ausgangsdüse coextrudiert werden, gefolgt von einer Abwärtsbewegung zu (2) einer mittleren Position, woraufhin lediglich ein erstes Material aus der Ausgangsdüse extrudiert wird, um das vorher extrudierte zweite Material einzukapseln, und anschließend zu (1) einer unteren Position.

2. Verfahren nach Anspruch 1, der das Einsetzen des Füllkopfes (10) in den Behälter umfasst und gleichzeitig mit der Bewegung des Kolbens (14) ermöglicht, dass Eiskonfektmaterial aus dem Düsenausgang (19) fließt, während der Füllkopf über eine wachsende Oberfläche Eiskonfektmaterials steigt, bis der Behälter im Wesentlichen gefüllt ist, gerade wenn der Kolben seine untere Position in seiner Rückführungsabwärtsbewegung erreicht.

3. Verfahren nach einem der vorhergehenden Ansprüche, wobei der Kolben (14) sich in seiner Aufwärtsbewegung in einer kontinuierlichen Bewegung bewegt und durch die unterste (1), die mittlere (2) und die oberste (3) Position verläuft, während er sich bewegt.

4. Verfahren nach einem der vorhergehenden Ansprüche, wobei der Kolben (14) sich in seiner Abwärtsbewegung in einer kontinuierlichen Bewegung bewegt und durch die oberste Position (3), die mittlere Position (2) und die unterste Position (1) verläuft, während er sich bewegt, bis der Fluss bei der untersten Position (1) angehalten wird.

5. Verfahren nach einem der vorhergehenden Ansprüche, wobei die Zeit, die in Anspruch genommen wird, damit sich der Kolben (14) von der unteren Position (1) zur oberen Position (3) bewegt, im Bereich von 0,2 bis 2,0 Sekunden liegt, bevorzugt im Bereich von 0,2 bis 1,0 Sekunden und am stärksten bevorzugt im Bereich von 0,2 bis 0,6 Sekunden.

6. Verfahren nach einem der vorhergehenden Ansprüche, wobei die Zeit, die in Anspruch genommen wird, damit sich der Kolben (14) von der oberen Position (3) zur unteren Position (1) bewegt, im Bereich von 0,2 bis 2,0 Sekunden liegt, bevorzugt im Bereich von 0,2 bis 1,0 Sekunden und am stärksten bevorzugt im Bereich von 0,2 bis 0,6 Sekunden.

7. Verfahren nach einem der vorhergehenden Ansprüche, wobei die Zeit, die für die Aufwärtsbewegung in Anspruch genommen wird, im Wesentlichen dieselbe ist, wie die Zeit, die für die Abwärtsbewegung in Anspruch genommen wird.

8. Verfahren nach einem der vorhergehenden Ansprüche, wobei das erste Eiskonfektmaterial eine Eiscreme ist.

**Revendications**

1. Procédé pour le remplissage d'un récipient avec une première matière de confiserie congelée encapsulant une seconde matière de confiserie, le procédé impliquant l'utilisation d'une tête de remplissage (10) ; la tête de remplissage (10) comprenant :

un boîtier (12) présentant une sortie de buse (19), une entrée de première matière basse (16), une entrée de seconde matière haute (18) et un piston pouvant aller et venir (14) mobile dans le boîtier (12) ; le piston (14) présentant une paroi externe et des extrémités haute et basse et un canal d'écoulement de matière interne (24) connectant une entrée haute (26) dans la paroi externe vers une sortie (28) dans l'extrémité basse, les piston (14), boîtier (12) et entrées (16, 18) étant positionnés et dimensionnés de sorte que le piston (14) présente :

(1) une position basse dans laquelle de la matière s'écoule à partir à la fois des première (16) et seconde (18) entrées sont bloquées par la paroi externe de piston (14) ;
(2) une position milieu dans laquelle le piston (14) ne bloque pas la première entrée (16) mais la seconde entrée (18) est bloquée par la paroi externe de piston (14) ;
(3) une position haute dans laquelle la première entrée (16) n'est pas bloquée et dans laquelle l'entrée de seconde matière (18) est en communication avec le canal d'écoulement de matière interne (24) ;

le procédé laissant la matière de confiserie congelée s'écouler à l'extérieur de la sortie de buse (19) dans le récipient lorsque le piston (14) se déplace dans une course vers le haut à partir de (1) une position basse vers (2) une position milieu et puis vers (3) une position haute
sur quoi les première et seconde matières sont co-extrudées à partir de la buse de sortie, puis par une course vers le bas vers (2) une position milieu sur quoi uniquement la première matière est extrudée à partir de la buse

7

de sortie pour encapsuler la seconde matière préalablement extrudée, et puis vers (1) une position basse.

2. Procédé selon la revendication 1, impliquant l'insertion de la tête de remplissage (10) dans le récipient et, simultanément avec le mouvement du piston (14), laissant la matière de confiserie congelée s'écouler à l'extérieur de la sortie de buse (19) lorsque la tête de remplissage s'élève au-dessus d'une surface en évolution de matière de confiserie congelée jusqu'à ce que le récipient soit pratiquement rempli jusque lorsque le piston atteint sa position basse sur sa course de retour vers le bas.

3. Procédé selon l'une quelconque des revendications précédentes, dans lequel le piston (14) se déplace dans sa course vers le haut dans un mouvement continu, passant à travers les positions la plus basse (1), milieu (2) et haute (3) lorsqu'il se déplace.

4. Procédé selon l'une quelconque des revendications précédentes, dans lequel le piston (14) se déplace dans sa course vers le bas dans un mouvement continu, passant à travers les position haute (3), position milieu (2) et position la plus basse (1) lorsqu'il se déplace jusqu'à ce que l'écoulement est interrompu dans la position la plus basse (1).

5. Procédé selon l'une quelconque des revendications précédentes, dans lequel la durée prise pour que le piston (14) se déplace de la position basse (1) jusqu'à la position haute (3) est de 0,2 à 2,0 secondes, encore mieux de 0,2 à 1,0 seconde, bien mieux encore de 0,2 à 0,6 seconde.

6. Procédé selon l'une quelconque des revendications précédentes, dans lequel la durée prise pour que le piston (14) se déplace de la position haute (3) vers la position basse (1) est de 0,2 à 2,0 secondes, encore mieux de 0,2 à 1,0 seconde, bien mieux encore de 0,2 à 0,6 seconde.

7. Procédé selon l'une quelconque des revendications précédentes, dans lequel la durée prise pour la course vers le haut est pratiquement identique à la durée prise pour la course vers le bas.

8. Procédé selon l'une quelconque des revendications précédentes, dans lequel la première matière de confiserie congelée est une crème glacée.

## Fig. 1

10

14

12

18

16

24

26

22

14

20

28

19

## Fig. 2

10

14

12

16

26

22

19

## Fig. 3

10

14

12

18

16

26

22

19

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2345332 A1